# EUROPEAN PATENT APPLICATION

(11) **EP 4 745 103 A1**
(43) Date of publication of application: **20.05.2026**
(21) Application number: 25747886.7
(22) Date of filing: 24.01.2025
(51) Int. Cl.: C03C 10/04, C03B 32/02

(54) **MICROCRYSTALLINE GLASS, PREPARATION METHOD THEREFOR AND USE THEREOF**

(30) Priority: 02.02.2024 CN 202410151202
(71) Applicant: Chongqing Aureavia Hi-tech Glass Co., Ltd, Chongqing 400714 (CN)
(72) Inventor: ZHOU, Jingpeng, Chongqing 400714 (CN); LUO, Feng, Chongqing 400714 (CN); TIAN, Qian, Chongqing 400714 (CN); HUANG, Hao, Chongqing 400714 (CN); LIU, Zhiqiang, Chongqing 400714 (CN)
(74) Representative: Dantz, Dirk
(86) International application number: PCT/CN2025/074949
(87) International publication number: WO 2025/162318

(57) **Abstract**

The present application discloses microcrystalline glass. The microcrystalline glass comprises a lithium disilicate crystal phase as a main crystal phase. On the basis of the molar percentages of oxides, the microcrystalline glass comprises the following components: SiO₂: 55.00-65.00 mol%, P₂O₅: 1.00-3.00 mol%, ZrO₂: 2.00-5.00 mol%, Li₂O: 25.00-32.00 mol%, Al₂O₃: 0-2.00 mol%, MgO: 0-2.00 mol%, Na₂O: 0-3.00 mol%, K₂O: 0-1.00 mol%, CaO: 0-2.00 mol%, SrO: 0-2.00 mol%, Ta₂O₅: 0-1.00 mol%, and La₂O₃: 0-1.00 mol%. In addition, these components in the microcrystalline glass also satisfy a specific content relationship. In the present application, the components of the microcrystalline glass are optimized and adjusted, such that the microcrystalline glass has a specific composition and structure, and it is ensured that the microcrystalline glass contains a large amount of lithium disilicate crystal phase, thereby ensuring that the microcrystalline glass has a high intrinsic strength and an excellent optical performance, significantly improving the chemical etching thinning effect of the microcrystalline glass, achieving a more excellent chemical etching thinning effect of the microcrystalline glass in a low concentration acidic liquid, and facilitating the improvement of the chemical etching thinning rate of the microcrystalline glass.

## Description

### CROSS-REFERENCE TO RELATED APPLICATION

The present invention claims the priority to the Chinese patent application with the filing No. 202410151202.X filed with the China National Intellectual Property Administration on February 02, 2024, and entitled "MICROCRYSTALLINE GLASS, PREPARATION METHOD THEREFOR AND USE THEREOF", the contents of which are incorporated herein by reference in entirety.

### TECHNICAL FIELD

The present invention relates to the technical field of microcrystalline glass, and particularly to a microcrystalline glass with a lithium disilicate crystalline phase as the main crystalline phase that is easily chemically etched, as well as the preparation method therefor and use thereof.

### BACKGROUND ART

With the advent of the smart era, microcrystalline glass has been increasingly applied in the electronics industry, such as in mobile phones, e-readers, tablets, vehicle-mounted central control screens, and various wearable electronic devices. The market demand for thinner touchscreen microcrystalline glass cover has grown, making the thinning of microcrystalline glass covers one of the important development trends in microcrystalline glasses. Additionally, with people's diversified demands for consumer electronic products, microcrystalline glass cover tends to be customized gradually, for example, with varying thicknesses and shapes. Moreover, the rear cover of mobile phones made of frosted material with microcrystalline glass is increasingly favored by consumers. It is evident that improving the chemical etching-thinning rate of microcrystalline glass is beneficial for enhancing the production efficiency of ultra-thin microcrystalline glass products or customized microcrystalline glass products, thereby increasing their economic benefits.

Furthermore, the current chemical thinning technologies and AG (anti-reflective/anti-glare) etching techniques commonly used for microcrystalline glass typically involve the use of etching solutions or frosting solutions, for example, hydrofluoric acid with high concentration or mixed solutions with other acids for etching. In the production process, highly concentrated acidic liquids are required to use in this process, and the longer the highly concentrated acidic liquids are used, the greater the harm to the operator's health and the environment.

### SUMMARY

The objective of the present invention is to provide a microcrystalline glass, in which a lithium disilicate crystalline phase serves as the main crystalline phase and the microcrystalline glass is easily chemically etched and thinned, as well as the preparation method therefor and use thereof. The microcrystalline glass in the present invention can achieve excellent chemical etching-thinning effect in low-concentration acidic liquid, which is not only beneficial to improving the chemical etching-thinning rate of microcrystalline glass, thus improving the production efficiency of ultra-thin microcrystalline glass products or customized microcrystalline glass products, but also can avoid using high-concentration acidic liquid for etching and thinning, thus better reducing the harm of etching solution to the health of operators and the environment.

The following technical solutions are provided in the present invention.

In the first aspect, a microcrystalline glass is provided, wherein the microcrystalline glass comprises a lithium disilicate crystalline phase, and the content of the lithium disilicate crystalline phase is greater than that of other crystalline phases in the microcrystalline glass. In terms of mole percentage on oxide basis, the microcrystalline glass comprises the following components:
SiO₂: 55.00mol%-65.00mol%, P₂O₅: 1.00mol%-3.00mol%, ZrO₂: 2.00mol%-5.00mol%, Li₂O: 25.00mol%-32.00mol%, Al₂O₃: 0-2.00mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, La₂O₃: 0-1.00mol%.

In terms of the content expressed by the mole percentage on oxide basis, the composition of the microcrystalline glass satisfies: 2×Li₂O+9×ZrO₂+1.2×CaO≥88.00mol%, optionally, 2×Li₂O+9×ZrO₂+1.2×CaO≥90.00mol%, wherein each oxide chemical formula respectively represents the mole percentage content of the corresponding component in the composition of the microcrystalline glass. For example, if the molar percentage content of Li₂O is 28%, then 28% is substituted into the formula for calculation.

In some embodiments of the present invention, in terms of the content expressed by the mole percentage on oxide basis, the content of SiO₂ and the content of Li₂O in the microcrystalline glass satisfy the following conditions:
SiO₂+Li₂O=89.00mol%-96.00mol%; optionally, SiO₂+Li₂O=90.00mol%-95.00mol%.

In some embodiments of the present invention, in terms of the content expressed by the mole percentage on oxide basis, the content of SiO₂ and the content of Li₂O in the microcrystalline glass satisfy the following conditions:
SiO₂/Li₂O=2.00-2.50; optionally, SiO₂/Li₂O=2.00-2.30.

In some embodiments of the present invention, in terms of the content expressed by the mole percentage on oxide basis, the content of components in the microcrystalline glass further satisfies the following conditions:
(Li₂O+ZrO₂)/(SiO₂+Al₂O₃+CaO)≥0.50; optionally, the value of (Li₂O+ZrO₂)/(SiO₂+Al₂O₃+CaO) is 0.50-0.60, wherein each oxide chemical formula respectively represents the mole percentage content of the corresponding component in the composition of the microcrystalline glass.

In some embodiments of the present invention, in terms of the content expressed by the mole percentage on oxide basis, the content of components in the microcrystalline glass further satisfies the following conditions:
(2×Li₂O-6×P₂O₃)/SiO₂≥0.70; optionally, the value of (2×Li₂O-6×P₂O₃)/SiO₂ is 0.70-1.00, wherein each oxide chemical formula respectively represents the mole percentage content of the corresponding component in the composition of the microcrystalline glass.

In some embodiments of the present invention, in terms of the mole percentage on oxide basis, the SiO₂ content in the microcrystalline glass is 58.00mol%-65.00mol%, optionally, the SiO₂ content is 60.00mol%-64.00mol%; and/or, the Li₂O content in the microcrystalline glass is 26.00mol%-32.00mol%, optionally, the Li₂O content is 27.00mol%-31.00mol%; and/or
the ZrO₂ content in the microcrystalline glass is 2.50mol%-5.00mol%, optionally, the ZrO₂ content is 3.00mol%-5.00mol%; and/or
the P₂O₅ content in the microcrystalline glass is 1.50mol%-3.00mol%, optionally, the P₂O₅ content is 1.50mol%-2.50mol%.

In some embodiments of the present invention, in terms of the mole percentage on oxide basis, the microcrystalline glass comprises the following components:
SiO₂: 60.50mol%-64.00mol%, P₂O₅: 1.50mol%-2.50mol%, ZrO₂: 4.00mol%-5.00mol%, Li₂O: 28.00mol%-31.00mol%, Al₂O₃: 0-1.50mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, and La₂O₃: 0-1.00mol%.

In some embodiments of the present invention, the crystallinity of the microcrystalline glass is ≥60.00wt%, optionally, the crystallinity is 60.00wt%-90.00wt%.

In some embodiments of the present invention, the average crystal size in the microcrystalline glass is less than or equal to 100nm, optionally, the average crystal size is less than or equal to 50nm, and further optionally, the average crystal size is 10nm-40nm.

In some embodiments of the present invention, the density of the microcrystalline glass is ≥2.50g/cm³, and optionally, the density is 2.50g/cm³-2.70g/cm³.

In some embodiments of the present invention, the refractive index of the microcrystalline glass is ≤1.60, and optionally, the refractive index is 1.50-1.60.

In some embodiments of the present invention, the Young's modulus of the microcrystalline glass is ≥100GPa, optionally, the Young's modulus is 108GPa-130GPa, and further optionally, the Young's modulus is 114GPa-130GPa.

In some embodiments of the present invention, the microcrystalline glass is transparent to visible light; at a thickness of the microcrystalline glass of 0.5mm and for light with a wavelength of 550nm, the transmittance of the microcrystalline glass is ≥85.00%, optionally, the transmittance of the microcrystalline glass is ≥ 90.00%.

In some embodiments of the present invention, at a thickness of the microcrystalline glass of 0.5mm, the optical b-value of the microcrystalline glass is ≤1.0, optionally, the optical b-value is ≤0.8.

In some embodiments of the present invention, when placed in an aqueous hydrofluoric acid solution with a mass concentration of 10% at 20°C for 20min, the change in mass per unit area of the microcrystalline glass is greater than or equal to 28.00mg/cm², and optionally, the change in mass per unit area of the microcrystalline glass is 30.00mg/cm²-50.00mg/cm².

In some embodiments of the present invention, the microcrystalline glass with a protective film on one of the two principal surfaces is placed in a mixed acid solution at 20°C for etching and thinning, wherein the etching rate of the microcrystalline glass is ≥7.00µm/min, and optionally, the etching rate of the microcrystalline glass is ≥9.00µm/min. In the mixed acid solution, the mass concentration of hydrofluoric acid is 10wt%, the mass concentration of nitric acid is 10wt%, the mass concentration of phosphoric acid is 8wt%, the mass concentration of the surfactant is 1wt%, and the mass concentration of diethylenetriaminepentaacetic acid is 0.5wt%, with the balance of water. Specifically, the following formula is used to calculate the etching rate herein: the etching rate = (thickness of microcrystalline glass sample before etching - thickness of microcrystalline glass sample after etching)/etching duration. In the present invention, optionally, the surfactant includes sodium dodecyl sulfonate. In the present invention, optionally, the etching and the thinning are carried out under the condition of flipping the sample, so as to ensure uniform etching on the surface without the protective film.

In some embodiments of the present invention, anti-glare microcrystalline glass or anti-reflective microcrystalline glass can be made from the microcrystalline glass by chemical etching treatment, wherein the composition at the center of the depth of the anti-glare microcrystalline glass or anti-reflective microcrystalline glass is the same as that of the microcrystalline glass.

In some embodiments of the present invention, the microcrystalline glass can be used to prepare chemically strengthened microcrystalline glass through chemical strengthening treatment, wherein the composition at the center of the chemically strengthened microcrystalline glass is the same as that of the microcrystalline glass.

In the second aspect, a preparation method for the microcrystalline glass is provided, including the following steps:
providing a base glass, wherein in terms of the mole percentage on oxide basis, the base glass comprises the following components: SiO₂: 55.00mol%-65.00mol%, P₂O₅: 1.00mol%-3.00mol%, ZrO₂: 2.00mol%-5.00mol%, Li₂O: 25.00mol%-32.00mol%, Al₂O₃: 0-2.00mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, and La₂O₃: 0-1.00mol%, wherein in terms of the content expressed by the mole percentage on oxide basis, the composition of the base glass satisfies: 2×Li₂O+9×ZrO₂+1.2×CaO≥88.00mol%;
carrying out heat treatment on the base glass to crystallize, so as to obtain the microcrystalline glass, wherein the microcrystalline glass comprises lithium disilicate crystalline phase, and the content of the lithium disilicate crystalline phase is greater than that of other crystalline phases in the microcrystalline glass.

In some embodiments of the present invention, the heat treatment includes nucleation treatment and crystallization treatment, wherein the nucleation treatment temperature is 500°C-700°C, the nucleation treatment duration is 10min-1440min, and the crystallization treatment temperature is 600°C-750°C, and the crystallization treatment duration is 5min-1440min.

In some embodiments of the present invention, the heating rate of the heat treatment process is 3°C/min-15°C/min, and optionally, the heating rate is 3°C/min-10°C/min.

In the third aspect, an electronic device is provided, wherein the electronic device includes the microcrystalline glass in any one of the aforementioned embodiments, or the electronic device includes the chemically strengthened microcrystalline glass made by chemically strengthening the microcrystalline glass in any one of the aforementioned embodiments. The composition at the center of the depth of the chemically strengthened microcrystalline glass is the same as that of the microcrystalline glass in the present invention. The electronic device includes, but is not limited to, mobile phones, tablet computers, televisions, computer display screens, or smart wearable devices.

Compared with the prior art, one or more technical solutions of the present invention include the following beneficial effects.

According to the present invention, the composition of the microcrystalline glass is optimized and adjusted, and the microcrystalline glass satisfies the specific composition and structure, so that the microcrystalline glass comprises a large amount of lithium disilicate crystalline phase. Through this method, not only are the high intrinsic strength and excellent optical properties of the microcrystalline glass ensured, but also the chemical etching-thinning effect of the microcrystalline glass is significantly improved. As a result, the microcrystalline glass can achieve better chemical etching-thinning effect even in low-concentration acidic liquids, and it is beneficial for improving the chemical etching-thinning rate of the microcrystalline glass, thus enhancing the production efficiency of ultra-thin microcrystalline glass products or customized microcrystalline glass products. By using the microcrystalline glass provided in the present invention for chemical etching-thinning, the use of high-concentration acidic liquid can be eliminated, thereby better reducing the harm of etching solutions to operator health and the environment.

### BRIEF DESCRIPTION OF THE DRAWINGS

FIG. 1 is a schematic flow chart of chemical etching-thinning of the microcrystalline glass in the present invention.
FIG. 2 is a comparison diagram of XRD patterns of microcrystalline glass of Example 3, Example 6, Example 8, Comparative Example 1 and Comparative Example 6.
FIG. 3 is a comparison diagram of DSC curves of the base glass of Example 8 and Comparative Example 6.
FIG. 4 is a transmittance curve of the microcrystalline glass in Example 8.
FIG. 5 is a transmittance curve of the microcrystalline glass in Comparative Example 6.

### DETAILED DESCRIPTION OF EMBODIMENTS

In the present invention, the technical solutions in the examples of the present invention will be described clearly and completely in conjunction with the drawings. Obviously, the described examples are only a part of the examples of the present invention, but not all of the examples. Based on the present invention, all other examples obtained by those skilled in the art belong to the protection scope of the present invention.

In the present invention, unless otherwise specified in particular circumstances, the numerical ranges listed herein include the upper and lower limits, as well as all integers and fractions within those ranges, and are not limited to the specific values cited when defining the ranges. The term "and/or" as used herein is inclusive. For example, "A and/or B" means A alone, B alone, or both A and B together.
I . Some related terms involved in the present invention are explained as follows.
   1. Base glass refers to glass that has not been subjected to nucleation treatment, crystallization treatment or strengthening treatment, which is also referred to as basic glass.
   2. Microcrystalline glass is also referred to as glass ceramics, which is a kind of solid composite material comprising both glass phase and microcrystalline phase (or also referred to as crystalline phase or crystallized phase) and is prepared by targeted and controlled heat treatment for the base glass.
   3. Nucleation refers to a heat treatment process that enables nucleating substances in the glass to grow small crystal nuclei.
   4. Crystallization refers to a heat treatment process that enables the glass to grow specific crystals on the basis of the crystal nuclei.
   5. Transmittance: when light of a specific wavelength is incident on the surface of the glass, the light will be reflected, absorbed and transmitted, wherein the ratio of the transmitted light intensity to the incident light intensity is the transmittance.
   6. Crystallinity refers to the percentage of the total mass of crystalline phases or crystals in microcrystalline glass to the mass of microcrystalline glass, and is also referred to as the total content of crystalline phases in the microcrystalline glass.
   7. Optical b-value is used to characterize the yellowness-blueness value of the material. In the present invention, the optical b-value refers to the transmitted light b-value, wherein a positive optical b-value indicates that the material exhibits a bluish tint.
   8. Refractive index refers to the ratio of the propagation speed of light in vacuum to the propagation speed of light in the medium.
   9. Principal surface refers to the surface with the largest area in a glass block or a glass sheet, such as the top and bottom surfaces of cover glass.
   10. Center of chemically strengthened microcrystalline glass includes the depth at the center of the chemically strengthened microcrystalline glass and positions adjacent to the depth at the center.
   11. Primary crystalline phase is also referred to as the main crystalline phase, and refers to the crystalline phase with a higher weight content than other crystalline phases existing in microcrystalline glass.
II. Relevant detection methods involved in the present invention

### 1. Synchronous thermal analysis test

The base glass is crushed, ground, and sieved through a 200-mesh screen to obtain the sample. Approximately 20mg of the sample is weighed and analyzed using a differential scanning calorimetry instrument under a nitrogen atmosphere. The temperature is increased from room temperature to 1100°C at a heating rate of 10°C/min, so as to obtain the DSC test curve of the sample. The differential scanning calorimetry instrument adopted in the present invention is a Mettler-Toledo TGA/DSC 3+ thermogravimetric and synchronous thermal analyzer. The reference material for the test is α-Al₂O₃ powder, the sample container is a platinum crucible, the ambient temperature for the instrument is 24°C, and the air humidity is ≤40%.

### 2. XRD test

### (1) Testing steps

The microcrystalline glass is crushed and ground into samples with a particle size less than 75µm. The ground sample is then tested using an X-ray diffractometer, so as to obtain the XRD diffraction peak curves and the XRD diffraction data.

The X-ray diffractometer adopted is Shimadzu XRD-6100, wherein 2θ=10°-50°, the scanning speed is 6°/min, the working voltage is 40kV and the working current is 30mA.

### (2) Determination of crystalline phase

The XRD diffraction data are analyzed using Jade software (JADE Standard 8.6) to identify the crystalline phases in the microcrystalline glass sample.

### (3) Determination of crystallinity

The test results of XRD (RAW format) are imported into Jade (X-ray diffraction data Rietveld refinement software) for fitting and calculation to determine the crystallinity of the microcrystalline glass sample. Specifically, the crystallinity of the microcrystalline glass sample is defined as the ratio of the fitted crystalline phase peak area to the total fitted peak area.

### (4) Determination of average crystal size

According to Scherrer formula D = Kλ/(βcosθ), the average crystal size of the sample can be calculated by using the result data obtained from the XRD test, wherein λ is the X-ray wavelength, λ = 0.154056nm, β is the full width at half maximum of the diffraction peak, K = 0.89, and θ is the Bragg diffraction angle. Specifically, the file of the RAW format output from the XRD instrument is curve-fitted in Jade software, and Jade outputs a fitting report. Based on the angle 20 value and Peak FWHM value corresponding to each diffraction peak in the fitting report, with converting the Peak FWHM value to the radian system: β=(FWHM/180×3.14), the crystal size of each diffraction peak is calculated by Scherrer formula D=Kλ/(βcosθ), and then the crystal sizes are averaged, so as to obtain the average crystal size.

### 3. Thickness measurement

The thickness of the microcrystalline glass is measured using a micrometer.

### 4. Optical performance test

The national standard of *GB*/*T 7962.12-2010 Test methods for colorless optical glass - Part 12: Spectral internal transmittance* is for reference. The transmittance and optical b-value of the microcrystalline glass of the present invention are tested by a haze meter. Specifically, the transmittance and optical b-value of five sheets of microcrystalline glass in the same batch for light with different wavelengths are tested by a haze meter. The average transmittance measured by five sheets of microcrystalline glass under 550nm-wavelength light is taken as the transmittance result of microcrystalline glass under 550nm-wavelength light. The average value of optical b-values measured by five sheets of microcrystalline glass is recorded as the optical b-value result of microcrystalline glass.

The haze meter used in the test of the present invention is Konica Minolta CM-3600A spectrophotometer in Japan, wherein the light receiving optical system is transmission, and the spectroscopic method is plane diffraction grating. The wavelength range is 360nm-740nm, and the wavelength interval is 10nm. The lighting source is the pulsed xenon lamp×4. The ambient temperature of the instrument is 24°C and the air humidity is 40%.

### 5. Young's modulus test

A UMS-100 ultrasonic material characterization system is used to measure the Young's modulus of the microcrystalline glass using acoustic waves.

### 6. Chemical etching effect test

### (1) Etching test in aqueous hydrofluoric acid (HF) solution, aqueous HCl solution or aqueous NaOH solution

In the present invention, the etching effect of the microcrystalline glass in aqueous HF solution, aqueous HCl solution or aqueous NaOH solution is tested according to *GB*/*T 32644-2016 "Test method for chemical durability of substrate glass of flat panel display",* and the mass change per unit area of the microcrystalline glass under each test condition is calculated respectively.

In the present invention, the mass concentration of the aqueous HF solution used in the test is 10wt% or 5wt%, and the test conditions are: test temperature of 20°C, etching duration or reaction duration of 20min.

In the present invention, the mass concentration of the aqueous HCl solution used in the test is 5wt%, and the test conditions are: test temperature of 95°C, etching duration or reaction duration of 24h.

In the present invention, the mass concentration of the aqueous NaOH solution used in the test is 5wt%, and the test conditions are: test temperature of 95°C, etching duration or reaction duration of 6h.

### (2) Etching test in mixed acid solution

The mixed acid solution used in the present invention includes hydrofluoric acid with mass concentration of 10wt%, nitric acid with mass concentration of 10wt%, phosphoric acid with mass concentration of 8wt%, surfactant with mass concentration of 1wt%, diethylenetriaminepentaacetic acid with mass concentration of 0.5wt%, and the balance being water. The surfactant is sodium dodecyl sulfonate.

The reagents for preparing the mixed acid solution are sourced as follows: surfactant: sodium dodecyl sulfonate with purity of ≥40%; diethylenetriaminepentaacetic acid with purity of ≥13.0%; hydrofluoric acid with purity of ≥40%; phosphoric acid with purity of ≥85%; and nitric acid with purity of ≥65%.

The test conditions for etching treatment with the mixed acid solution in the present invention are: test temperature of 20°C, etching duration or reaction duration of 30min. Specifically, first, a protective film is applied to one of the two principal surfaces of the microcrystalline glass sample, and its thickness (T1) is measured; then the filmed microcrystalline glass sample is placed in a spraying device, with the spraying flow rate of the spraying device set to 500L/min, so that the spraying device continuously sprays the aforementioned mixed acid solution onto the un-filmed surface of the microcrystalline glass sample; during this process, and every 15 minutes, the sample is subjected to flipping the sample treatment by rotating the sample by 180°, so as to ensure uniform etching of the sample. The initial sample placement time is recorded. After the spraying device has sprayed the microcrystalline glass sample for 30min, the microcrystalline glass sample is taken out and its thickness (T2) is measured again, wherein the etching rate is (T1-T2)/30.

### 7. Density test

In the present invention, the density of the microcrystalline glass is measured using an electronic density balance SD-200L from ALFA MIRAGE, Japan.

### 8. Refractive index test

In the present invention, the refractive index of the microcrystalline glass is measured using an Abbe refractometer WYA-2WAJ from LICHENBANGXI Instrument Technology, Shanghai, China.

### III. Microcrystalline glass and the preparation method therefor and the use scheme thereof

In the prior art, in order to improve the chemical etching efficiency of microcrystalline glass, a high-concentration etching solution and high temperature are usually selected to cooperate to increase the etching speed of etching solution to microcrystalline glass. However, the high-temperature condition not only deteriorates the working environment but also causes the etching solution to boil and evaporate. This not only further increases the consumption of high-concentration etching solution but also poses hazards to the health of operators and the environment.

To avoid the aforementioned issues, a microcrystalline glass capable of achieving excellent chemical etching effect in a low-concentration acidic liquid is provided in the present invention, which not only reduces the use amount of acidic liquid in etching solution but also lowers the working temperature during chemical etching, thus preventing deterioration of the working environment due to evaporation of the etching solution, and further decreasing the use amount of acidic liquid in etching solution. According to the present invention, the composition of the microcrystalline glass is optimized and adjusted. By making the microcrystalline glass satisfy the specific composition and structure, a large amount of lithium disilicate crystalline phase is comprised in the microcrystalline glass. Through this method, not only are the high intrinsic strength and excellent optical properties of the microcrystalline glass ensured, but also the chemical etching-thinning effect of the microcrystalline glass is significantly improved. As a result, the microcrystalline glass can achieve a better chemical etching-thinning effect even in low-concentration acidic liquid, which is beneficial for improving the chemical etching-thinning rate of the microcrystalline glass, thus further enhancing the production efficiency of ultra-thin microcrystalline glass products or customized microcrystalline glass products. The microcrystalline glass can rapidly react with low-concentration etching solutions at a fast etching rate. Even at room temperature, a relatively high etching rate of the microcrystalline glass can be achieved, thereby effectively improving etching condition while accelerating the etching rate and reducing consumption of the etching solution. Moreover, by using the microcrystalline glass provided in the present invention for chemical etching-thinning, the use of high-concentration acidic liquid can be eliminated, thereby better reducing the harm of etching solution to operator health and the environment.

In some embodiments of the present invention, a microcrystalline glass is provided, wherein the microcrystalline glass comprises a lithium disilicate crystalline phase, and the content of the lithium disilicate crystalline phase is greater than that of other crystalline phases in the microcrystalline glass. In terms of mole percentage on oxide basis, the microcrystalline glass comprises the following components:
SiO₂: 55.00mol%-65.00mol%, P₂O₅: 1.00mol%-3.00mol%, ZrO₂: 2.00mol%-5.00mol%, Li₂O: 25.00mol%-32.00mol%, Al₂O₃: 0-2.00mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, La₂O₃: 0-1.00mol%.

In terms of the content expressed by the mole percentage on oxide basis, the composition of the microcrystalline glass satisfies: 2×Li₂O+9×ZrO₂+1.2×CaO≥88.00mol%, optionally, 2×Li₂O+9×ZrO₂+1.2×CaO≥90.00mol%, wherein each oxide chemical formula respectively represents the mole percentage content of the corresponding component in the composition of the microcrystalline glass. By optimizing the composition of the microcrystalline glass to ensure that each component in the microcrystalline glass satisfies specific content and content relationships, the synergistic interaction between various components is utilized, so as to guarantee the formation of a specific internal structure in the microcrystalline glass, thus guaranteeing a high content of lithium disilicate crystalline phase in the microcrystalline glass. This not only ensures that the microcrystalline glass possesses high intrinsic strength and excellent optical properties, but also significantly improves the chemical etching-thinning effect of the microcrystalline glass. As a result, the microcrystalline glass can achieve superior chemical etching-thinning effect in acidic liquid with a low concentration and at low temperature, thereby enhancing the chemical etching-thinning rate of the microcrystalline glass and thus improving the production efficiency of ultra-thin microcrystalline glass products or customized microcrystalline glass products.

The crystalline phase of lithium disilicate (Li₂Si₂O₅) is an orthorhombic crystal based on [Si₂O₅] tetrahedral arrays, with flat or plate-like crystal morphology. Within the microcrystalline glass, the lithium disilicate crystal is an interlocking microstructure with random orientation, forcing the path of cracks to distort when they pass through the crystal, so as to prevent the crack from spreading, thus improving the strength and fracture toughness of the microcrystalline glass. Simultaneously, the refractive index of lithium disilicate crystal is close to that of the glass matrix (e.g., the base glass used to prepare the microcrystalline glass), making it an ideal crystalline phase for producing highly transparent microcrystalline glass. In the present invention, the microcrystalline glass comprises a structure with lithium disilicate as the main crystalline phase, ensuring it to achieve high intrinsic strength (also referred to as inherent strength) and excellent optical properties. At the same time, compared with other microcrystalline glass, the microcrystalline glass of the present invention exhibits enhanced chemical etchability.

In the present invention, SiO₂ serves as the network-forming oxide and is an indispensable component for constructing the glass network structure. Simultaneously, as a crucial constituent of the lithium disilicate crystalline phase, SiO₂ is also essential. However, excessive SiO₂ increases the viscosity of the glass melt, making glass melting difficult. Therefore, in order to meet the requirements of glass formability and achieve the desired crystallization effect in the present invention, the SiO₂ content is controlled at 55.00mol%-65.00mol%.

In some embodiments of the present invention, in the microcrystalline glass, the SiO₂ content can be 55.00mol%-65.00mol%, 58.00mol%-64.00mol%, 60.00mol%-65.00mol%, 60.50mol%-63.50mol%, 58.00mol%-65.00mol%, or 60.00mol%-64.00mol%. In some embodiments, in the microcrystalline glass, the SiO₂ content can be 55.00mol%, 56.00mol%, 57.00mol%, 58.00mol%, 59.00mol%, 60.00mol%, 60.50mol%, 60.74mol%, 61.00mol%, 61.15mol%, 61.72mol%, 61.76mol%, 61.83mol%, 62.00mol%, 62.58mol%, 63.00mol%, 63.17mol%, 63.50mol%, 64.17mol%, 64.50mol%, or 65.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, Al₂O₃, as an optional component, is an intermediate oxide in forming of glass. An appropriate amount of Al₂O₃ can stabilize the network structure. However, an excessive amount of Al₂O₃ will increase the viscosity of glass melt, leading to the precipitation of other crystalline phases such as petalite, so as to reduce the content of the lithium disilicate crystalline phase, i.e., the main crystalline phase. Therefore, in the present invention, in order to meet the desired crystalline phase structure, the Al₂O₃ content is controlled to be 0-2.00 mol%.

In some embodiments of the present invention, in the microcrystalline glass, the Al₂O₃ content can be 0-2.00mol%, 0.10mol%-1.80mol%, 0-1.50mol%, 0.20mol%-1.60mol%, 0.00mol%-0.50mol%, or 1.30mol%-1.50mol%. In some embodiments, the Al₂O₃ content can be 0.00mol%, 0.10mol%, 0.30mol%, 0.50mol%, 0.70mol%, 0.80mol%, 0.90mol%, 1.00mol%, 1.10mol%, 1.20mol%, 1.30mol%, 1.36mol%, 1.37mol%, 1.38mol%, 1.39mol%, 1.40mol%, 1.42mol%, 1.45mol%, 1.50mol%, 1.60mol%, 1.70mol%, or 2.0mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, P₂O₅ serves as a nucleating agent, which is essential. When its content is either insufficient or excessive, the crystallization effect will be compromised, making it difficult to obtain microcrystalline glass with the desired optical properties and intrinsic strength. For instance, it can result in insufficient transparency of the microcrystalline glass. Therefore, to ensure the acquisition of the desired microcrystalline glass with the specific structure in the present invention, the P₂O₅ content is controlled to be 1.00mol%-3.00mol%.

In some embodiments of the present invention, in the microcrystalline glass, the P₂O₅ content can be 1.00mol%-3.00mol%, 1.50mol%-2.50mol%, 1.80mol%-1.90mol%, 1.60mol%-2.00mol%, or 1.50mol%-3.00mol%. In some embodiments, the P₂O₅ content can be 1.00mol%, 1.20mol%, 1.40mol%, 1.50mol%, 1.60mol%, 1.70mol%, 1.80mol%, 1.87mol%, 1.86mol%, 1.85mol%, 1.83mol%, 1.89mol%, 1.82mol%, 1.90mol%, 2.00mol%, 2.10mol%, 2.20mol%, 2.30mol%, 2.40mol%, 2.50mol%, 2.60mol%, 2.70mol%, 2.80mol%, 2.90mol%, or 3.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, ZrO₂ is an intermediate oxide in glass formation and also an essential component. Increasing the content of ZrO₂ to a certain extent can improve the alkali resistance of the microcrystalline glass, but the acid resistance will decrease. An appropriate amount of ZrO₂ is beneficial for achieving efficient chemical etching-thinning of the microcrystalline glass in acid solutions, while also functioning to reduce crystal size and increase the toughness of the microcrystalline glass. However, when its content is too high, it will increase the difficulty of melting the base glass, resulting in a large amount of white precipitates in the glass. Therefore, to ensure the formability of the glass and enable the microcrystalline glass to possess high intrinsic strength and optical properties, while also improving the chemical etching effect of the microcrystalline glass, the ZrO₂ content is controlled to be 2.00mol%-5.00mol%.

In some embodiments of the present invention, in the microcrystalline glass, the ZrO₂ content can be 2.00mol%-5.00mol%, 3.00mol%-4.50mol%, 2.50mol%-5.00mol%, 4.50mol%-5.00mol%, or 3.00mol%-5.00mol%. In some embodiments, the ZrO₂ content can be 2.00mol%, 2.50mol%, 3.00mol%, 3.10mol%, 3.31mol%, 3.50mol%, 3.72mol%, 4.00mol%, 4.21mol%, 4.44mol%, 4.50mol%, 4.57mol%, 4.61mol%, 4.63mol%, 4.66mol%, 4.68mol%, 4.72mol%, or 5.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, MgO, as an optional component, can adjust the glass phase composition in the microcrystalline glass. However, excessive MgO will affect crystal growth, thereby influencing the structure of the microcrystalline glass and impacting its mechanical strength or optical properties. Therefore, to ensure that the microcrystalline glass satisfies the desired structure, the MgO content is controlled to be 0-2.00mol%.

In some embodiments of the present invention, in the microcrystalline glass, the MgO content can be 0-2.00mol%, 0.10mol%-1.80mol%, 0-1.34mol%, 0.50mol%-1.60mol%, 0.00mol%-0.50mol%, or 1.60mol%-1.80mol%. In some embodiments, the MgO content can be 0, 0.10mol%, 0.20mol%, 0.30mol%, 0.40mol%, 0.46mol%, 0.50mol%, 0.60mol%, 0.70mol%, 0.80mol%, 0.87mol%, 0.90mol%, 1.00mol%, 1.06mol%, 1.10mol%, 1.20mol%, 1.30mol%, 1.34mol%, 1.40mol%, 1.50mol%, 1.57mol%, 1.60mol%, 1.70mol%, 1.80mol%, 1.89mol%, or 2.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, Na₂O, as an optional component, belongs to the network-modifying oxide and can provide free oxygen. An appropriate amount of Na₂O can optimize the viscosity of glass and promote the melting and fining of glass melt. However, an excessive amount of Na₂O will affect the network structure of glass, thus affecting the properties of microcrystalline glass. Therefore, in order to ensure that the microcrystalline glass meets the desired structure, the Na₂O content is controlled to be 0-3.00 mol%.

In some embodiments of the present invention, in the microcrystalline glass, the Na₂O content can be 0-3.00mol%, 0.10mol%-2.80mol%, 0.50mol%-2.50mol%, 1.00mol%-2.00mol%, 0-0.50mol%, or 0.50mol%-2.59mol%. In some embodiments, the Na₂O content can be 0, 0.10mol%, 0.20mol%, 0.30mol%, 0.40mol%, 0.50mol%, 0.56mol%, 0.80mol%, 1.00mol%, 1.48mol%, 1.50mol%, 2.00mol%, 2.50mol%, 2.59mol%, 2.80mol%, or 3.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, K₂O is used as an optional component. An appropriate amount of K₂O can reduce the viscosity of glass melt and promote the formation of crystals. However, if too much K₂O is comprised, it will easily lead to the coarsening of glass crystals, thus reducing the transmittance of microcrystalline glass and microcrystalline glass products. Therefore, in order to ensure the microcrystalline glass to obtain better optical properties and high intrinsic strength, the K₂O content is controlled to be 0-1.00 mol% in the present invention.

In some embodiments of the present invention, in the microcrystalline glass, the K₂O content can be 0-1.00mol%, 0.10mol%-0.90mol%, 0-0.50mol%, 0.50mol%-1.00mol%, or 0-0.92mol%. In some embodiments, the K₂O content can be 0, 0.10mol%, 0.20mol%, 0.21mol%, 0.36mol%, 0.40mol%, 0.50mol%, 0.60mol%, 0.69mol%, 0.72mol%, 0.80mol%, 0.92mol%, or 1.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, Li₂O is an essential component of the lithium disilicate crystalline phase (Li₂Si₂O₅) and directly affects the content of lithium disilicate crystalline phase in the microcrystalline glass. As a network-modifying oxide in glass formation, it provides free oxygen to optimize the viscosity of the glass melt and promote melting and fining of the glass melt. Simultaneously, it can also supply lithium ions for ion exchange with fused salt baths, making it a crucial factor influencing the achievable stress level in the microcrystalline glass. However, excessive addition of Li₂O can lead to poor stability of the glass crystallization process, and even lead to precipitation of other crystalline phases, thus affecting the structure of microcrystalline glass. Therefore, to ensure that the microcrystalline glass satisfies the desired structure with excellent optical properties and high intrinsic strength, while improving its chemical etching-thinning effect, the Li₂O content is controlled to be 25.00mol%-32.00mol%.

In some embodiments of the present invention, in the microcrystalline glass, the Li₂O content can be 25.00mol%-32.00mol%, 27.00mol%-30.00mol%, 26.00mol%-32.00mol%, 28.00mol%-30.00mol%, 27.00mol%-31.00mol%, 29.00mol%-32.00mol%, or 25.00mol%-30.00mol%. In some embodiments, the Li₂O content can be 25.00mol%, 26.00mol%, 27.00mol%, 28.00mol%, 28.59mol%, 29.00mol%, 29.80mol%, 29.52mol%, 29.93mol%, 29.25mol%, 29.30mol%, 29.66mol%, 29.52mol%, 29.05mol%, 30.00mol%, 30.22mol%, 31.00mol%, 31.07mol%, or 32.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, CaO is an optional component, and an appropriate amount of CaO can reduce the high-temperature viscosity of glass melt, thus facilitating the glass molding, and at the same time, it can increase the network structure and glass density. However, excessive CaO will lead to a sharp decline in the crystallinity of glass, thus affecting the intrinsic strength of microcrystalline glass and further affecting the chemical etching-thinning effect of microcrystalline glass. Therefore, in order to ensure that the microcrystalline glass obtains the desired intrinsic strength and realizes the desired chemical etching-thinning effect, the CaO content is controlled to be 0-2.00mol%.

In some embodiments of the present invention, in the microcrystalline glass, the CaO content can be 0-2.00mol%, 0.10mol%-1.90mol%, 0-1.83mol%, 0.5mol%-1.50mol%, 0.60mol%-1.00mol%, 0.80mol%-2.00mol%, or 0-0.80mol%. In some embodiments, the CaO content can be 0, 0.10mol%, 0.30mol%, 0.50mol%, 0.60mol%, 0.80mol%, 0.90mol%, 0.92mol%, 0.93mol%, 0.94mol%, 1.00mol%, 1.50mol%, 1.80mol%, 1.83mol%, 1.90mol%, or 2.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, SrO, as an optional component, is an alkaline-earth metal oxide. A proper amount of SrO can adjust the glass phase composition in microcrystalline glass and is beneficial to increase the density of microcrystalline glass and reduce the expansion softening point of microcrystalline glass, thus facilitating hot bending forming. However, excessive introduction of SrO will deteriorate the optical properties of the microcrystalline glass. Therefore, to ensure that the microcrystalline glass possesses excellent optical properties and high intrinsic strength while simultaneously improving its hot bending forming effect, the SrO content is controlled to be 0-2.00 mol%.

In some embodiments of the present invention, in the microcrystalline glass, the SrO content can be 0-2.00mol%, 0.10mol%-1.90mol%, 0-0.40mol%, 0.40mol%-2.00mol%, 0-0.46mol%, 0.46mol%-1.83mol%, or 0.40mol%-1.90mol%. In some embodiments, the SrO content can be 0, 0.10mol%, 0.20mol%, 0.30mol%, 0.40mol%, 0.46mol%, 0.50mol%, 0.60mol%, 0.70mol%, 0.80mol%, 0.90mol%, 0.92mol%, 1.00mol%, 1.10mol%, 1.20mol%, 1.30mol%, 1.40mol%, 1.50mol%, 1.60mol%, 1.70mol%, 1.80mol%, 1.83mol%, 1.90mol%, or 2.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, Ta₂O₅ serves as an optional component capable of enhancing the mechanical strength of the glass. However, excessive Ta₂O₅ easily leads to a decrease of the devitrification resistance of glass. Therefore, in order to make the microcrystalline glass satisfy excellent optical properties and high intrinsic strength, the Ta₂O₅ content is controlled to be 0-1.00mol%. In some embodiments of the present invention, in the microcrystalline glass, the Ta₂O₅ content can be 0-1.00mol%, 0.5mol%-0.9mol%, 0-0.50mol%, 0.3mol%-0.80mol%, or 0-0.46mol%. In some embodiments, the Ta₂O₅ content can be 0, 0.10mol%, 0.20mol%, 0.30mol%, 0.40mol%, 0.46mol%, 0.50mol%, 0.60mol%, 0.70mol%, 0.80mol%, 0.90mol%, 0.98mol%, or 1.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, La₂O₃ is an optional component that can increase the glass density and the Young's modulus. However, excessive La₂O₃ easily leads to a decrease of the glass transmittance. Therefore, in order to make the microcrystalline glass satisfy excellent optical properties and high intrinsic strength, the La₂O₃ content is controlled to be 0-1.00 mol%.

In some embodiments, the La₂O₃ content can be 0-1.00mol%, 0.10mol%-0.90mol%, 0-0.60mol%, 0.20mol%-0.80mol%, 0.30mol%-0.70mol%, 0-0.53mol%, or 0.60mol%-1.00mol%. In some embodiments, the La₂O₃ content can be 0, 0.10mol%, 0.20mol%, 0.27mol%, 0.30mol%, 0.40mol%, 0.50mol%, 0.53mol%, 0.60mol%, 0.70mol%, 0.80mol%, 0.89mol%, 0.90mol%, or 1.00mol%, or the content can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In the present invention, the composition of the microcrystalline glass is further optimized and adjusted, so that the composition of the microcrystalline glass satisfies: 2×Li₂O+9×ZrO₂+1.2×CaO≥88.00mol%, and optionally, 2×Li₂O+9×ZrO₂+1.2×CaO≥90.00mol%, wherein each oxide chemical formula respectively represents the mole percentage content of the corresponding component in the composition of the microcrystalline glass. By making the composition of microcrystalline glass satisfy this relationship, the chemical etching-thinning effect of microcrystalline glass can be obviously improved under the condition of ensuring the microcrystalline glass to obtain high intrinsic strength and excellent optical properties, so that the microcrystalline glass can achieve an excellent chemical etching-thinning effect in a low-concentration acidic liquid.

In some embodiments of the present invention, in the microcrystalline glass, in terms of oxide molar percentage, the value of 2×Li₂O+9×ZrO₂+1.2×CaO can be 88.00mol%-105.00mol%, 90.00mol%-99.00mol%, 89.00mol%-104.00mol%, 90.00mol%-103.00mol%, 99.00mol%-105.00mol%, 88.00mol%-105.00mol%, 92.00mol%-105.00mol%, 94.00mol%-104.00mol%, 98.00mol%-103.00mol%, or 88.00mol%-98.00mol%. In some embodiments, the value of 2×Li₂O+9×ZrO₂+1.2×CaO can be 88.00mol%, 89.00mol%, 90.00mol%, 90.18mol%, 91.00mol%, 92.00mol%, 93.00mol%, 94.00mol%, 94.23mol%, 95.00mol%, 96.00mol%, 97.00mol%, 97.75mol%, 98.00mol%, 98.08mol%, 99.00mol%, 99.63mol%, 100.00mol%, 100.41mol%, 100.55mol%, 101.00mol%, 101.02mol%, 101.09mol%, 101.49mol%, 101.66mol%, 101.83mol%, 102.00mol%, 103.00mol%, or 105.00mol%, or the value can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, in terms of the content expressed by the mole percentage on oxide basis, the content of SiO₂ and the content of Li₂O in the microcrystalline glass satisfy the following conditions: SiO₂+Li₂O=89.00mol%-96.00mol%. By making the composition of the microcrystalline glass meet this relationship, it is beneficial to ensure that the desired content of lithium disilicate crystals can be precipitated in the microcrystalline glass, and to effectively reduce the precipitation of other crystals, such as the petalite crystals, so as to ensure that the microcrystalline glass can obtain higher intrinsic strength and excellent optical properties, and to ensure that the microcrystalline glass can obtain higher stress level after chemical strengthening. Moreover, it is also beneficial to ensure that the base glass remains transparent when preparing the microcrystalline glass by heat treatment, or to ensure that the base glass remains transparent during the melting process.

In some embodiments, in the microcrystalline glass, in terms of oxide mole percentage, the value of SiO₂+Li₂O can be 89.00mol%-96.00mol%, 90.00mol%-95.00mol%, 91.00mol%-93.00mol%, 90.50mol%-93.50mol%, 90.00mol%-92.00mol%, or 91.00mol%-95.00mol%. In some embodiments, the value of SiO₂+Li₂O can be 89.00mol%, 89.79mol%, 90.00mol%, 90.40mol%, 90.50mol%, 91.00mol%, 91.18mol%, 91.24mol%, 91.56mol%, 91.63mol%, 91.66mol%, 92.00mol%, 92.52mol%, 92.47mol%, 93.00mol%, 93.39mol%, 94.00mol%, 95.00mol%, or 96.00mol%, or the value can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, in terms of the content expressed by the mole percentage on oxide basis, the content of SiO₂ and the content of Li₂O in the microcrystalline glass satisfy the following conditions: SiO₂/Li₂O=2.00-2.50. By making the composition of the microcrystalline glass meet this relationship, the crystal size of the microcrystalline glass can be reduced, so as to improve the optical properties of the microcrystalline glass. At the same time, it is beneficial to ensure the precipitation of the lithium disilicate crystal, which is the main crystalline phase, and to effectively reduce the precipitation of other crystalline phases, such as petalite crystal, thus facilitating the microcrystalline glass to achieve higher intrinsic strength and higher stress level after chemical strengthening.

In some embodiments, in the microcrystalline glass, in terms of oxide mole percentage, the value of SiO₂/Li₂O can be 2.00-2.50, 2.05-2.25, 2.00-2.30, or 2.10-2.35. In some embodiments, the value of SiO₂/Li₂O can be 2.00, 2.05, 2.07, 2.08, 2.09, 2.10, 2.16, 2.19, 2.20, 2.25, 2.30, 2.35, 2.40, 2.45, or 2.50, or the value can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, in terms of the content expressed by the oxide mole percentage, the content of components in the microcrystalline glass further satisfies the following condition: (Li₂O+ZrO₂)/(SiO₂+Al₂O₃+CaO)≥0.50. By making the composition of the microcrystalline glass satisfy this relationship, it is beneficial to further improve the chemical etching-thinning effect under the condition of ensuring that the microcrystalline glass forms a specific network structure with high intrinsic strength.

In some embodiments, in the microcrystalline glass, in terms of oxide mole percentage, the value of (Li₂O+ZrO₂)/(SiO₂+Al₂O₃+CaO) can be 0.50-0.60, 0.51-0.59, 0.55-0.60, 0.50-0.55, 0.52-0.58, 0.53-0.57, 0.54-0.56, or 0.51-0.55. In some embodiments, the value of (Li₂O+ZrO₂)/(SiO₂+Al₂O₃+CaO) can be 0.50, 0.51, 0.52, 0.54, 0.53, 0.55, 0.56, 0.57, 0.58, 0.59, or 0.60, or the value can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, in terms of the content expressed by the oxide mole percentage, the content of components in the microcrystalline glass further satisfies the following conditions: (2×Li₂O-6×P₂O₅)/SiO₂≥0.70. By making the composition of the microcrystalline glass satisfy this relationship, it is advantageous to guarantee the precipitation of the desired content of lithium disilicate crystalline phase in the microcrystalline glass, thereby facilitating the attainment of high intrinsic strength for the microcrystalline glass.

In some embodiments, in the microcrystalline glass, in terms of oxide mole percentage, the value of (2×Li₂O-6×P₂O₅)/SiO₂ can be 0.70-1.00, 0.80-0.90, 0.70-0.80, or 0.90-1.00. In some embodiments, the value of (2×Li₂O-6×P₂O₅)/SiO₂ can be 0.70, 0.73, 0.75, 0.78, 0.80, 0.90, or 1.00, or the value can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, in terms of the mole percentage on oxide basis, the microcrystalline glass comprises the following components: SiO₂: 60.50mol%-64.00mol%, P₂O₅: 1.50mol%-2.50mol%, ZrO₂: 4.00mol%-5.00mol%, Li₂O: 28.00mol%-31.00mol%, Al₂O₃: 0-1.50mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, La₂O₃: 0-1.00mol%.

In some embodiments of the present invention, the crystallinity of the microcrystalline glass is ≥60.00wt%, and optionally, the crystallinity is 60.00wt%-90.00wt%. The "crystallinity of microcrystalline glass" herein refers to the percentage of content of all crystalline phases/crystals in microcrystalline glass to the mass of microcrystalline glass. A higher content of the microcrystalline phase is more beneficial to improve the mechanical strength performance of microcrystalline glass, thus ensuring that microcrystalline glass has better intrinsic strength. In some embodiments, the crystallinity of the microcrystalline glass can be 70.00wt%-90.00wt%, 65.00wt%-85.00wt%, 60.00wt%-90.00wt% or 70.00wt%-80.00wt%. In some embodiments, the crystallinity of the microcrystalline glass can be 60.00wt%, 65.00wt%, 65.40wt%, 70.00wt%, 70.10wt%, 70.40wt%, 79.50wt%, 75.00wt%, 76.70wt%, 76.60wt%, 79.50wt%, 79.10wt%, 74.30wt%, 70.50wt%, 73.50wt%, 72.10wt%, 73.30wt%, 78.30wt%, 80.00wt%, 85.00wt%, or 90.00wt%, or it can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, similar expressions such as "with a lithium disilicate crystalline phase as the main crystalline phase" or "the content of the lithium disilicate crystalline phase is greater than that of other crystalline phases in the microcrystalline glass" mean that the lithium disilicate crystalline phase accounts for more than approximately 70 weight percentage (wt%) of all crystalline phases in the microcrystalline glass according to embodiments of the present invention.

In some embodiments of the present invention, non-limiting examples of other possible crystalline phases in microcrystalline glass include, but are not limited to, petalite crystalline phase and/or lithium phosphate crystalline phase. In some embodiments, the microcrystalline glass further includes petalite crystalline phase, optionally, the weight percentage of petalite crystalline phase in the microcrystalline glass is less than or equal to 20%, and further optionally, the weight percentage of petalite crystalline phase in the microcrystalline glass can be less than or equal to 15%, less than or equal to 10%, or less than or equal to 5%.

In some embodiments of the present invention, in the microcrystalline glass, the average crystal size is ≤100.00nm, and optionally, the average crystal size is less than or equal to 50nm. Satisfying the smaller average crystal size is beneficial to ensure the excellent optical properties of microcrystalline glass. In some embodiments, in the microcrystalline glass, the average crystal size can be 5nm-100nm, 10nm-90nm, 5nm-30nm, 10nm-40nm, 5nm-50nm, 18.70nm-26.80nm, 20.10nm-25.60nm, 22.80nm-23.00nm, or 10nm-30nm. In some embodiments, in the microcrystalline glass, the average crystal size can be 5.00nm, 10.00nm, 15.00nm, 18.00nm, 18.70nm, 19.00nm, 20.00nm, 20.10nm, 21.00nm, 22.20nm, 22.80nm, 23.00nm, 23.30nm, 25.00nm, 25.60nm, 26.80nm, 30.00nm, 35.00nm, 40.00nm, 45.00nm, 50.00nm, 60.00nm, 70.00nm, 80.00nm, 90.00nm, or 100.00nm, or it can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, the density of the microcrystalline glass is ≥2.50g/cm³, and a higher density is beneficial to ensure that the microcrystalline glass meets the high intrinsic strength. In some embodiments, the density of the microcrystalline glass can be 2.50g/cm³ -2.70g/cm³, 2.51g/cm³-2.65g/cm³, or 2.50g/cm³-3.00g/cm³. In some embodiments, the density of the microcrystalline glass can be 2.50g/cm³, 2.51g/cm³, 2.52g/cm³, 2.53g/cm³, 2.56g/cm³, 2.57g/cm³, 2.58g/cm³, 2.59g/cm³, 2.61g/cm³, 2.64g/cm³, 2.65g/cm³, 2.68g/cm³, 2.70g/cm³, or 2.75g/cm³, or it can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, the Young's modulus of the microcrystalline glass is ≥100.00GPa. Exhibiting a high Young's modulus indicates that the microcrystalline glass possesses high intrinsic strength, and it is conducive to obtaining high mechanical strength performance. In some embodiments, the Young's modulus of the microcrystalline glass can be 100.00GPa-130.00GPa, 105.00GPa-125.00GPa, 108GPa-130GPa, 110.00GPa-125.00GPa, 114GPa-130GPa, or 110.00GPa-120.00GPa. In some embodiments, the Young's modulus of the microcrystalline glass can be 100.00GPa, 102.00GPa, 105.00GPa, 108.00GPa, 110.00GPa, 112.73GPa, 113.92GPa, 114.27GPa, 114.62GPa, 115.00GPa, 115.87GPa, 115.95GPa, 116.05GPa, 116.71GPa, 117.07GPa, 117.45GPa, 118.95GPa, 119.04GPa, 120.00GPa, 125.00GPa, or 130.00GPa, or it can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, the refractive index of the microcrystalline glass is ≤1.60, and optionally, the refractive index is 1.50-1.60.

In some embodiments of the present invention, the microcrystalline glass is transparent to visible light; at a thickness of 0.5mm and for light with a wavelength of 550nm, the transmittance of the microcrystalline glass is ≥85.00%; and at a thickness of 0.5mm of the microcrystalline glass and for light with a wavelength of 550nm, the transmittance of the microcrystalline glass is ≥ 90.00%, and further optionally, at a thickness of 0.5mm of the microcrystalline glass and for light with a wavelength of 550nm, the transmittance of the microcrystalline glass is 90.00%-93.00%. Microcrystalline glass with a high transmittance can ensure superior light transmission and superior transparency, making it suitable for the cover glass of a display screen demanding high display performance. In some embodiment, at a thickness of 0.5mm, for light with a wavelength of 550nm, the transmittance of microcrystalline glass can be 85.00%, 86.00%, 87.00%, 88.00%, 89.00%, 90.00%, 90.22%, 90.33%, 90.35%, 90.37%, 90.40%, 90.44%, 90.46%, 90.47%, 90.50%, 90.57%, 90.61%, 90.74%, 91.00%, 91.50%, 92.00%, 92.50%, or 93.00%, or it can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, at a thickness of 0.5mm of the microcrystalline glass, the optical b-value of the microcrystalline glass is less than or equal to 1.00, and optionally, at the thickness of 0.5mm of the microcrystalline glass, the optical b-value of the microcrystalline glass is less than 0.80. In some embodiments, at a thickness of 0.5mm of the microcrystalline glass, the optical b-value can be 0.10, 0.20, 0.30, 0.31, 0.32, 0.35, 0.40, 0.41, 0.44, 0.48, 0.50, 0.56, 0.59, 0.60, 0.69, 0.70, 0.76, 0.80, 0.90, or 1.00, or it can be in any range and sub-range between any two of the aforementioned specific values, as long as the microcrystalline glass with the desired properties of the present invention can be obtained. It should be understood that in a specific embodiment, any of the above ranges can be combined with any other range, as long as the microcrystalline glass with the desired properties of the present invention can be obtained.

In some embodiments of the present invention, the microcrystalline glass with a protective film on one of the two principal surfaces is placed in a mixed acid solution at 20°C to contact with it, so as to realize the etching and thinning, wherein the etching rate of the microcrystalline glass is ≥7.00µm/min, and optionally, the etching rate of the microcrystalline glass is ≥9.00µm/min. In the mixed acid solution, the mass concentration of hydrofluoric acid is 10wt%, the mass concentration of nitric acid is 10wt%, the mass concentration of phosphoric acid is 8wt%, the mass concentration of the surfactant is 1wt%, and the mass concentration of diethylenetriaminepentaacetic acid is 0.5wt%, with the balance of water. Specifically, the following formula is used to calculate the etching rate herein: the etching rate = (thickness of microcrystalline glass sample before etching - thickness of microcrystalline glass sample after etching)/etching duration. "Contact" refers to at least one touched entity to undergo physical changes, chemical changes, or the close physical contact between two entities. One or more principal surfaces of the microcrystalline glass can, for example, involve selective partial or complete impregnation, spraying, immersion, and other similar treatments, or combinations of multiple treatments using an etching solution. In some embodiments, the etching solution is brought into contact with one or more principal surfaces by spraying the solution onto the one or more principal surfaces. In some embodiments, the etching solution is brought into contact with one or more principal surfaces by immersing the microcrystalline glass in a container holding the etching solution (e.g., a bath). If one or more of the principal surfaces in one or more of the principal surfaces are required not to contact the solution, a protective film can be applied to the surface before the microcrystalline glass contacts the etching solution, so as to isolate the etching solution from the microcrystalline glass. Meanwhile, the protective film remains after contacting the etching solution and can be easily removed. Any suitable methods can be used to remove the protective film, such as contacting the protective film with a dissolving liquid, heating the protective film to liquefy and discharge it, and similar methods and materials, or the combinations thereof. In the present invention, optionally, the surfactant includes sodium dodecyl sulfonate. In the present invention, optionally, the etching and thinning are carried out under the condition of flipping the sample, so as to ensure uniform etching on the surface without the protective film. However, it is not limited to such etching process, and the chemical etching-thinning processes commonly used in the art can be used in the microcrystalline glass in the present invention. The microcrystalline glass of the present invention can achieve etching rates of 7.00µm/min or higher, 8.00µm/min or higher, 9.00µm/min or higher, 10.00µm/min or higher, or 11.00µm/min or higher even at a relatively low temperature (20°C), demonstrating that the microcrystalline glass of the present invention enables highly efficient chemical etching-thinning effect.

In some embodiments of the present invention, when placed in an aqueous hydrofluoric acid solution with a mass concentration of 10% at 20°C for 20 min, the change in mass per unit area of the microcrystalline glass is greater than or equal to 28.00mg/cm², and optionally, the change in mass per unit area of the microcrystalline glass is 30.00mg/cm²-50.00 mg/cm². In some embodiments, under the aforementioned conditions, the change in mass per unit area of the microcrystalline glass can be 28.00mg/cm², 29.00mg/cm², 30.00mg/cm², 32.00mg/cm², 35.00mg/cm², 38.00mg/cm², 40.00mg/cm², 42.00mg/cm², 45.00mg/cm², 48.00mg/cm², or 50.00mg/cm², or it can be in any range and sub-range between any two of the aforementioned specific values. This demonstrates that the microcrystalline glass maintains highly efficient chemical etching-thinning effect even when using chemical etching solutions with low acid contents, thereby improving the etching-thinning efficiency.

In the present invention, a preparation method for the above-mentioned microcrystalline glass is further provided, including the following steps:
providing a base glass, wherein in terms of the mole percentage on oxide basis, the base glass comprises the following components: SiO₂: 55.00mol%-65.00mol%, P₂O₅: 1.00mol%-3.00mol%, ZrO₂: 2.00mol%-5.00mol%, Li₂O: 25.00mol%-32.00mol%, Al₂O₃: 0-2.00mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, La₂O₃: 0-1.00mol%, wherein in terms of the content expressed by the mole percentage on oxide basis, the composition of the base glass satisfies: 2×Li₂O+9×ZrO₂+1.2×CaO≥88.00mol%; and
carrying out heat treatment on the base glass to crystallize, so as to obtain the microcrystalline glass, wherein the microcrystalline glass comprises lithium disilicate crystalline phase, and the content of the lithium disilicate crystalline phase is greater than that of other crystalline phases in the microcrystalline glass. It should be understood that the microcrystalline glass is prepared by heat treatment on the base glass, and therefore, the composition of the adopted base glass is the same or basically the same as that of the microcrystalline glass in terms of mole percentage of oxides.

In some embodiments of the present invention, in terms of the oxide mole percentage, the composition of the base glass further satisfies: SiO₂+Li₂O=89.00mol%-96.00mol%, and optionally, SiO₂+Li₂O=90.00mol%-95.00mol%, and/or
SiO₂/Li₂O=2.00-2.50; optionally, SiO₂/Li₂O=2.00-2.30, and/or
(Li₂O+ZrO₂)/(SiO₂+Al₂O₃+CaO)≥0.50, and optionally, the value of (Li₂O+ZrO₂)/(SiO₂+Al₂O₃+CaO) is 0.50-0.60, and/or
(2×Li₂O-6×P₂O₅)/SiO₂≥0.70, and optionally, the value of (2×Li₂O-6×P₂O₅)/SiO₂ is 0.70-1.00, wherein
in the above relational expressions, each oxide chemical formula respectively represents the mole percentage content of the corresponding component in the composition of the base glass.

In the present invention, the base glass can be prepared by conventional preparation methods, for example, the molding methods of the base glass can include, but are not limited to floating, overflowing, calendering or casting processes. For example, according to the present invention, in the preparation method of the base glass, the raw material components and fining agent are first uniformly mixed, then melted at 1550°C-1680°C for 5h or longer. Subsequently, the obtained glass melt is cast into a forming mold and cooled to 850°C-950°C. The formed and cooled glass sample is then placed in an annealing furnace at 450°C-500°C for annealing for 12h-48h, followed by cooling to room temperature, so as to obtain the base glass sample. Optionally, the fining agent can include, but is not limited to, one or more types of sodium chloride, tin oxide, or antimony oxide, with the addition amount of the fining agent being 0-1wt% of the total amount of various raw materials.

In some embodiments of the present invention, the heat treatment includes the nucleation treatment and the crystallization treatment. The nucleation treatment temperature is 500°C-700°C, the nucleation treatment duration is 10min-1440min, and the crystallization treatment temperature is 600°C-750°C, and the crystallization treatment duration is 5min-1440min.

In some embodiments, the nucleation treatment temperature can be 500°C, 520°C, 545°C, 550°C, 560°C, 565°C, 570°C, 590°C, 600°C, 650°C, or 700°C, or it can be in any range and sub-range between any two of the aforementioned specific values, as long as the microcrystalline glass with the desired properties of the present invention can be obtained. In some embodiments, the crystallization treatment temperature can be 600°C, 655°C, 670°C, 680°C, 685°C, 700°C, 705°C, or 750°C, or it can be in any range and sub-range between any two of the aforementioned specific values, as long as the microcrystalline glass with the desired properties of the present invention can be obtained. In some embodiments, the nucleation treatment duration can be 10min, 180min, 240min, 300min, 1200min, or 1440min, or it can be in any range and sub-range between any two of the aforementioned specific values, as long as the microcrystalline glass with the desired properties of the present invention can be obtained. In some embodiments, the crystallization treatment duration can be 5min, 10min, 180min, 240min, 300min, 1200min, or 1440min, or it can be in any range and sub-range between any two of the aforementioned specific values, as long as the microcrystalline glass with the desired properties of the present invention can be obtained. It should be understood that, in an embodiment, any of the above ranges can be combined with any other range, as long as the microcrystalline glass with the desired properties of the present invention can be obtained.

In some embodiments of the present invention, the heating rate of the heat treatment process is 3°C/min-15°C/min, and optionally, the heating rate is 3°C/min-10°C/min. For example, it is possible to heat from room temperature to the nucleation treatment temperature at a heating rate of 3°C/min-15°C/min, and/or, heat from the nucleation treatment temperature to the crystallization treatment temperature at a heating rate of 3°C/min-15°C/min. In some embodiments, the heating rate of the heat treatment process can be 3°C/min, 4°C/min, 5°C/min, 6°C/min, 7°C/min, 8°C/min, 9°C/min, 10°C/min, or 15°C/min, or it can be in any range and sub-range between any two of the aforementioned specific values, as long as the microcrystalline glass with the desired properties of the present invention can be obtained.

In some embodiments of the present invention, anti-glare microcrystalline glass or anti-reflective microcrystalline glass can be made from the microcrystalline glass by chemical etching treatment, wherein the composition at the center of the depth of the anti-glare microcrystalline glass or anti-reflective microcrystalline glass is the same as that of the microcrystalline glass.

In some embodiments of the present invention, the microcrystalline glass can be used to prepare chemically strengthened microcrystalline glass through chemical strengthening treatment, wherein the composition at the center of the depth of the chemically strengthened microcrystalline glass is the same as that of the microcrystalline glass. It should be understood that, compared with the microcrystalline glass before chemical strengthening, after chemical strengthening, the composition at the surface of the microcrystalline glass product can be different from the composition of the microcrystalline glass before chemical strengthening (without ion exchange process). This is because when the chemical strengthening is carried out, one type of alkali metal ions (for example, Li⁺ or Na⁺) on the surface of the freshly formed microcrystalline glass (microcrystalline glass before chemical strengthening) is replaced by larger alkali metal ions (for example, Na⁺ or K⁺) respectively. However, in the embodiment, the glass composition and phase assemblage at or near the center of the depth of the microcrystalline glass product still have those of the freshly formed microcrystalline glass. That is to say, in the present invention, the composition (e.g., the composition of the tensile stress layer) and the phase assemblage at the center of the chemically strengthened microcrystalline glass prepared by chemical strengthening treatment are the same or basically the same as those of the freshly formed microcrystalline glass.

In the present invention, the microcrystalline glass possesses high intrinsic strength and excellent optical properties. The chemically strengthened microcrystalline glass or anti-glare microcrystalline glass prepared using the microcrystalline glass also exhibits superior performance, and it can be used in electronic devices or electronic products, particularly the electronic devices and electronic products requiring the installation of glass components. The electronic devices or electronic products include, but are not limited to, mobile phones, tablet computers, televisions, computer display screens or smart wearable devices.

The microcrystalline glass or the chemically strengthened microcrystalline glass made from the microcrystalline glass with excellent performance provided by the present invention can be used for electronic device, including but not limited to mobile phones, tablet computers, handheld game console, portable digital devices (such as digital cameras), vehicle-mounted central control, electronic whiteboard glass, smart home, televisions, computer display screens and smart wearable devices (such as smart bands and smart watches ). It can further be used for vehicles, aerocrafts or aircrafts, and it can further be used for any glass component requiring microcrystalline glass. For example, it can be used for display screen, cover glass, touch screen, glass inner screen or inner frame of an electronic device, etc. For example, it can be used for a windshield of a vehicle, an aerocraft or an aircraft, such as a front windshield or a side windshield. For example, it can be used for work surfaces, other surfaces, appliance doors, floor tiles, wall panels or storage containers. Other surfaces can include but are not limited to exterior wall surfaces, stair tread surfaces, column cladding, or countertop surfaces. Storage containers can include but are not limited to cups, plates, medicine bottles, or beverage bottles.

### IV. The technical solutions of the present invention are further explained with specific examples.

### Example 1

### Step 1: Preparation of base glass.

1000g of raw materials were weighed out according to the batch composition (the raw materials were prepared according to the formulation of Example 1 in Table 1). 5g of sodium chloride was added to the prepared raw materials, and the mixture was blended for 30 minutes using a V-mixer. After evenly mixed, the raw materials were then transferred to a platinum crucible and melted in a lifting furnace at 1650°C for 5 hours. Then, the resultant was poured into a forming mold to form and cool into a glass block, wherein it was cooled to approximately 900°C, and subsequently, the resultant was annealed in an annealing furnace at 460°C for 12 hours before being cooled to room temperature with the furnace, so as to obtain the base glass block.

### Step 2: Preparation of microcrystalline glass

The base glass block obtained in Step 1 was subjected to nucleation treatment and crystallization treatment sequentially, wherein the process conditions of the nucleation treatment and crystallization treatment are listed in Table 3, so as to obtain the transparent microcrystalline glass block. In terms of the oxide mole percentage, the composition of the obtained microcrystalline glass is the same as that of the base glass, as shown in Table 1.

Specifically, the base glass block was placed in a crystallization furnace. The temperature was first raised from room temperature to the nucleation treatment temperature at a heating rate of 10°C/min, wherein the nucleation treatment temperature was 520°C, and the nucleation treatment duration was 4h. Subsequently, the temperature was raised to the crystallization treatment temperature at a heating rate of 10°C/min, wherein the crystallization treatment temperature was 720°C, and the crystallization treatment duration was 1.5h. Herein, the nucleation treatment duration refers to the temperature holding duration after the crystallization furnace has been heated to the set nucleation treatment temperature at the set heating rate, and the crystallization treatment duration refers to the temperature holding duration after the crystallization furnace has been heated to the set crystallization treatment temperature at the set heating rate.

### Step 3: Processing of microcrystalline glass samples

The microcrystalline glass sample block obtained in Step 2 was shaped, cut, and polished to obtain the microcrystalline glass samples with the desired dimensions. In the present invention, the obtained microcrystalline glass samples were the polished microcrystalline glass sheets measuring 50mm×50mm×0.5mm.

Referring to Example 1, Examples 2-12 and Comparative Examples 1-6 were prepared using the components listed in Tables 1-2, respectively, so as to obtain the corresponding base glass. Then, the respective microcrystalline glasses were obtained by performing nucleation treatment and crystallization treatment according to Tables 3-4. Subsequently, the chemical etching-thinning tests were conducted, and the test results are shown in Tables 5-6.

**Table 1**

| Composition (mol) | Exa mple 1 | Exa mple 2 | Exa mple 3 | Exa mpl e 4 | Exa mpl e 5 | Exa mple 6 | Exa mple 7 | Exa mple 8 | Exa mple 9 | Exa mpl e 10 | Exa mpl e 11 | Exa mpl e 12 |
|---|---|---|---|---|---|---|---|---|---|---|---|---|
| SiO₂ | 62.58% | 61.82% | 61.72% | 61.76% | 62.59% | 61.15% | 63.17% | 62.01% | 61.72% | 61.15% | 60.74% | 63.16% |
| Al₂O₃ | 0.00 % | 1.40 % | 1.38 % | 1.40 % | 1.40 % | 1.37 % | 0.00 % | 1.39 % | 1.38 % | 1.37 % | 1.36 % | 1.42 % |
| P₂O₅ | 1.87 % | 1.86 % | 1.85 % | 1.86 % | 1.87 % | 1.83 % | 1.89 % | 1.85 % | 1.85 % | 1.83 % | 1.82 % | 1.89 % |
| ZrO₂ | 4.68 % | 4.66 % | 4.61 % | 3.72 % | 4.21 % | 4.57 % | 4.72 % | 4.63 % | 4.61 % | 4.57 % | 4.44 % | 3.31 % |
| MgO | 1.34 % | 0.00 % | 0.00 % | 0.00 % | 0.00 % | 0.00 % | 0.00 % | 0.00 % | 0.00 % | 0.00 % | 0.00 % | 0.00 % |
| Na₂O | 0.00 % | 0.00 % | 0.00 % | 0.00 % | 0.00 % | 0.00 % | 0.00 % | 0.00 % | 0.00 % | 0.00 % | 2.59 % | 0.00 % |
| K₂O | 0.00 % | 0.00 % | 0.00 % | 0.00 % | 0.00 % | 0.00 % | 0.92 % | 0.00 % | 0.00 % | 0.00 % | 0.00 % | 0.00 % |
| Li₂O | 28.5 9% | 29.8 0% | 29.5 2% | 29.8 0% | 29.9 3% | 29.2 5% | 29.3 0% | 29.6 6% | 29.5 2% | 29.2 5% | 29.0 5% | 30.2 2% |
| CaO | 0.94 % | 0.00 % | 0.92 % | 0.93 % | 0.00 % | 1.83 % | 0.00 % | 0.00 % | 0.00 % | 0.00 % | 0.00 % | 0.00 % |
| SrO | 0.00 % | 0.00 % | 0.00 % | 0.00 % | 0.00 % | 0.00 % | 0.00 % | 0.46 % | 0.92 % | 1.83 % | 0.00 % | 0.00 % |
| La₂O₃ | 0.00 % | 0.00 % | 0.00 % | 0.53 % | 0.00 % | 0.00 % | 0.00 % | 0.00 % | 0.00 % | 0.00 % | 0.00 % | 0.00 % |
| Ta₂O₅ | 0.00 % | 0.46 % | 0.00 % | 0.00 % | 0.00 % | 0.00 % | 0.00 % | 0.00 % | 0.00 % | 0.00 % | 0.00 % | 0.00 % |
| Total | 100. 0% | 100. 0% | 100. 0% | 100. 0% | 100. 0% | 100. 0% | 100. 0% | 100. 0% | 100. 0% | 100. 0% | 100. 0% | 100. 0% |
| SiO₂+Li₂O | 91.1 7% | 91.6 2% | 91.2 4% | 91.5 6% | 92.5 2% | 90.4 % | 92.4 7% | 91.6 7% | 91.2 4% | 90.4 % | 89.7 9% | 93.3 8% |
| SiO₂/Li₂O | 2.19 | 2.07 | 2.09 | 2.07 | 2.09 | 2.09 | 2.16 | 2.09 | 2.09 | 2.09 | 2.09 | 2.09 |
| 2×Li₂O+9×ZrO₂+ 1.2×CaO | 100. 43% | 101. 54% | 101. 63% | 94.2 0% | 97.7 5% | 101. 83% | 101. 08% | 100. 99% | 100. 53% | 99.6 3% | 98.0 6% | 90.2 3% |
| (Li₂O+ZrO₂)/(SiO ₂+Al₂O₃+CaO) | 0.52 | 0.55 | 0.53 | 0.52 | 0.53 | 0.53 | 0.54 | 0.54 | 0.54 | 0.54 | 0.54 | 0.52 |
| (2×Li₂O-6×P₂O₅)/SiO₂ | 0.73 | 0.78 | 0.78 | 0.78 | 0.78 | 0.78 | 0.75 | 0.78 | 0.78 | 0.78 | 0.78 | 0.78 |

Note: In Table 1, an oxide content of "0.00%" indicates that the component was not actively or intentionally added to the glass composition during the initial compounding process, but it can be present as an impurity. In Table 1, the content percentages, expressed as molar percentages of oxides, are substituted into the relationship equations between the contents of various oxides.

**Table 2**

| Composition (mol) | Comparati ve Example 1 | Comparati ve Example 2 | Comparati ve Example 3 | Comparati ve Example 4 | Comparati ve Example 5 | Comparati ve Example 6 |
|---|---|---|---|---|---|---|
| SiO₂ | 63.77% | 60.96% | 61.58% | 61.73% | 61.87% | 60.36% |
| Al₂O₃ | 1.43% | 1.50% | 1.52% | 1.47% | 1.41% | 1.49% |
| P₂O₅ | 1.91% | 2.00% | 2.02% | 1.96% | 1.88% | 1.98% |
| ZrO₂ | 2.38% | 2.50% | 2.53% | 2.45% | 3.16% | 2.48% |
| MgO | 0.00% | 0.00% | 0.00% | 0.00% | 0.00% | 0.00% |
| Na₂O | 0.00% | 1.00% | 0.00% | 0.98% | 2.60% | 0.99% |
| K₂O | 0.00% | 0.00% | 0.00% | 0.00% | 0.00% | 0.00% |
| Li₂O | 25.17% | 26.43% | 26.69% | 25.91% | 29.08% | 26.16% |
| CaO | 5.34% | 5.61% | 5.66% | 5.50% | 0.00% | 5.55% |
| SrO | 0.00% | 0.00% | 0.00% | 0.00% | 0.00% | 0.99% |
| La₂O₃ | 0.00% | 0.00% | 0.00% | 0.00% | 0.00% | 0.00% |
| Ta₂O₅ | 0.00% | 0.00% | 0.00% | 0.00% | 0.00% | 0.00% |
| Total | 100.00% | 100.00% | 100.00% | 100.00% | 100.00% | 100.00% |
| SiO₂+Li₂O | 88.94% | 87.39% | 88.27% | 87.64% | 90.95% | 86.52% |
| SiO₂/Li₂O | 2.53 | 2.31 | 2.31 | 2.38 | 2.13 | 2.31 |
| 2×Li₂O+9×ZrO₂+1.2×CaO | 78.17% | 82.09% | 82.94% | 80.47% | 86.60% | 81.30% |
| (Li₂O+ZrO₂)/(SiO₂+Al₂O₃ +CaO) | 0.39 | 0.43 | 0.42 | 0.41 | 0.51 | 0.42 |
| (2×Li₂O-6×P₂O₅)/SiO₂ | 0.61 | 0.67 | 0.67 | 0.65 | 0.76 | 0.67 |

Note: In Table 2, an oxide content of "0.00%" indicates that the component was not actively or intentionally added to the glass composition during the initial compounding process, but it can be present as an impurity. In Table 2, the content percentages, expressed as molar percentages of oxides, are substituted into the relationship equations between the contents of various oxides.

**Table 3**

| Microcrys talline glass | Exa mple 1 | Exa mple 2 | Exa mple 3 | Exa mple 4 | Exa mple 5 | Exa mple 6 | Exa mple 7 | Exa mple 8 | Exa mple 9 | Exa mple 10 | Exa mple 11 | Exa mple 12 |
|---|---|---|---|---|---|---|---|---|---|---|---|---|
| Nucleatio n temperature (°C) | 520 | 520 | 520 | 535 | 530 | 540 | 520 | 520 | 520 | 525 | 520 | 520 |
| Holding duration of nucleation (h) | 4.0 | 4.0 | 4.0 | 4.0 | 4.0 | 4.0 | 4.0 | 4.0 | 4.0 | 4.0 | 4.0 | 4.0 |
| Crystalliz ation temperatu re (°C) | 720 | 710 | 690 | 715 | 730 | 700 | 715 | 690 | 690 | 700 | 680 | 680 |
| Holding duration of crystalliza tion (h) | 1.5 | 1.0 | 1.5 | 1.5 | 1.0 | 1.5 | 1.5 | 1.5 | 1.5 | 1.5 | 1.0 | 1.5 |
| Primary crystalline phase | Lithi um disili cate | Lithi um disili cate | Lithi um disili cate | Lithi um disili cate | Lithi um disili cate | Lithi um disili cate | Lithi um disili cate | Lithi um disili cate | Lithi um disili cate | Lithi um disili cate | Lithi um disili cate | Lithi um disili cate |
| Crystallini ty | 70.10 % | 76.70 % | 76.60 % | 79.50 % | 79.10 % | 74.30 % | 70.50 % | 73.5 % | 72.1 % | 70.4 % | 73.3 % | 78.30 % |
| Average crystal size (nm) | 25.60 | 22.80 | 23.00 | 20.10 | 23.30 | 26.80 | 26.80 | 18.7 | 22.2 | 25.6 | 20.1 | 21.00 |
| Optical b-value | 0.59 | 0.56 | 0.41 | 0.32 | 0.50 | 0.76 | 0.69 | 0.35 | 0.44 | 0.60 | 0.48 | 0.31 |
| Transmitt ance @550nm | 90.47 % | 90.40 % | 90.46 % | 90.74 % | 90.61 % | 90.22 % | 90.33 % | 90.57 % | 90.44 % | 90.35 % | 90.50 % | 90.37 % |
| Density (g/cm³) | 2.57 | 2.57 | 2.58 | 2.58 | 2.56 | 2.59 | 2.57 | 2.59 | 2.61 | 2.64 | 2.58 | 2.53 |
| Refractive index | 1.57 | 1.57 | 1.57 | 1.57 | 1.56 | 1.57 | 1.56 | 1.57 | 1.57 | 1.58 | 1.57 | 1.56 |
| Young's modulus (GPa) | 116.7 1 | 117.0 7 | 114.2 7 | 114.6 2 | 115.9 5 | 119.0 4 | 117.4 5 | 115.8 7 | 116.0 5 | 118.9 5 | 113.9 2 | 112.7 3 |

**Table 4**

| Microcrystalline glass | Comparative Example 1 | Comparative Example 2 | Comparative Example 3 | Comparative Example 4 | Comparative Example 5 | Comparative Example 6 |
|---|---|---|---|---|---|---|
| Nucleation temperature (°C) | 520 | 515 | 520 | 515 | 520 | 520 |
| Holding duration of nucleation (h) | 4.0 | 4.0 | 4.0 | 4.0 | 4.0 | 4.0 |
| Crystallization temperature (°C) | 680 | 685 | 680 | 675 | 735 | 690 |
| Holding duration of crystallization (h) | 1.0 | 1.0 | 1.0 | 1.0 | 1.0 | 1.5 |
| Primary crystalline phase | Lithium disilicate | Lithium disilicate | Lithium disilicate | Lithium disilicate | Lithium disilicate | Lithium disilicate |
| Crystallinity | 68.50% | 72.60% | 72.50% | 70.30% | 80.40% | 70.60% |
| Average crystal size (nm) | 25.80 | 39.40 | 30.60 | 36.60 | 19.70 | 35.60 |
| Optical b-value | 0.68 | 4.65 | 1.55 | 2.57 | 0.48 | 3.21 |
| Transmittance @550nm | 90.20% | 84.77% | 89.15% | 88.02% | 90.71% | 87.34% |
| Density (g/cm³) | 2.57 | 2.57 | 2.57 | 2.57 | 2.55 | 2.56 |
| Refractive index | 1.56 | 1.56 | 1.57 | 1.56 | 1.56 | 1.56 |
| Young's modulus (GPa) | 103.69 | 108.52 | 107.75 | 107.94 | 115.23 | 108.38 |

**Table 5**

| Chemical etching-thinnine test | Exa mple 1 | Exa mple 2 | Exa mple 3 | Exa mple 4 | Exa mple 5 | Exa mple 6 | Exa mple 7 | Exa mple 8 | Exa mple 9 | Exa mple 10 | Exa mple 11 | Exa mple 12 |
|---|---|---|---|---|---|---|---|---|---|---|---|---|
| Test conditions: 20°C, 10% HF, 20min, change in mass per unit area (mg/cm²) | 41.3 1 | 44.4 3 | 45.3 1 | 32.4 6 | 37 | 46.3 9 | 43.3 4 | 43.6 | 42.0 8 | 40.0 1 | 37.9 3 | 28.7 5 |
| Test conditions: 20°C, 5% HF, 20min, change in mass per unit area (mg/cm²) | 19.9 8 | 21.0 9 | 22 | 14.8 7 | 17.7 7 | 22.8 5 | 20.7 2 | 20.8 3 | 20.4 6 | 18.9 9 | 18.1 4 | 13.6 2 |
| Test conditions: 20°C, mixed acid, etching rate (µm/min) | 9.67 | 10.3 3 | 10.7 3 | 7.67 | 8.33 | 11.6 7 | 10.3 3 | 10.3 3 | 9.67 | 9.33 | 8.67 | 7.00 |
| Test conditions: 95°C, 5% HCl, 24h, change in mass per unit area (mg/cm²) | 0.11 | 0.04 | 0.08 | 0.06 | 0.07 | 0.09 | 0.12 | 0.07 | 0.07 | 0.06 | 0.08 | 0.05 |
| Test conditions: 95°C, 5% NaOH, 6h, change in mass per unit area (mg/cm²) | 0.10 | 0.03 | 0.06 | 0.06 | 0.08 | 0.07 | 0.05 | 0.05 | 0.05 | 0.05 | 0.04 | 0.06 |

**Table 6**

| Chemical etching-thinning test | Comparative Example 1 | Comparative Example 2 | Comparative Example 3 | Comparative Example 4 | Comparative Example 5 | Comparative Example 6 |
|---|---|---|---|---|---|---|
| Test conditions: 20°C, 10% HF, 20min, change in mass per unit area (mg/cm²) | 14.94 | 19.75 | 20.92 | 17.92 | 25.83 | 18.94 |
| Test conditions: 20°C, 5% HF, 20min, change in mass per unit area (mg/cm²) | 6.86 | 8.15 | 8.60 | 7.76 | 12.74 | 7.85 |
| Test conditions: 20°C, mixed acid, etching rate (µm/min) | 3.67 | 5.67 | 6.00 | 5.00 | 6.67 | 5.53 |
| Test conditions: 95°C, 5% HCl, 24h, change in mass per unit area (mg/cm²) | 0.04 | 0.07 | 0.04 | 0.04 | 0.07 | 0.06 |
| Test conditions: 95°C, 5% NaOH, 6h, change in mass per unit area (mg/cm²) | 0.18 | 0.17 | 0.18 | 0.18 | 0.07 | 0.16 |

As can be seen from the above tables and attached drawings:
by adjusting the composition of the microcrystalline glass in Examples 1-12, the microcrystalline glass with high crystallinity and high density can be prepared, so that the prepared microcrystalline glass with both high Young's modulus and high intrinsic strength can be ensured, and the microcrystalline glass can effectively inhibit crack propagation during fracture. Furthermore, the microcrystalline glass can exhibit excellent optical transmittance and a low b-value, which is beneficial to improving the commercial applications of the microcrystalline glass.

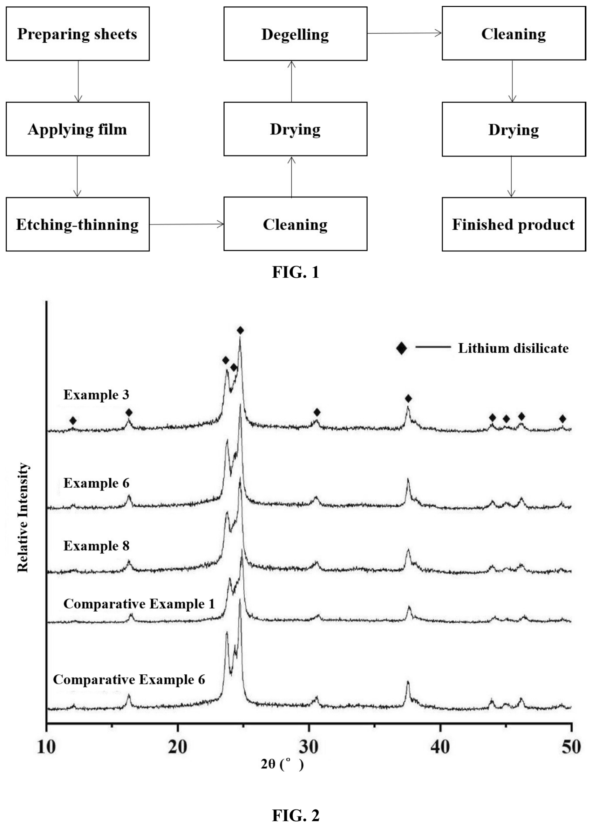

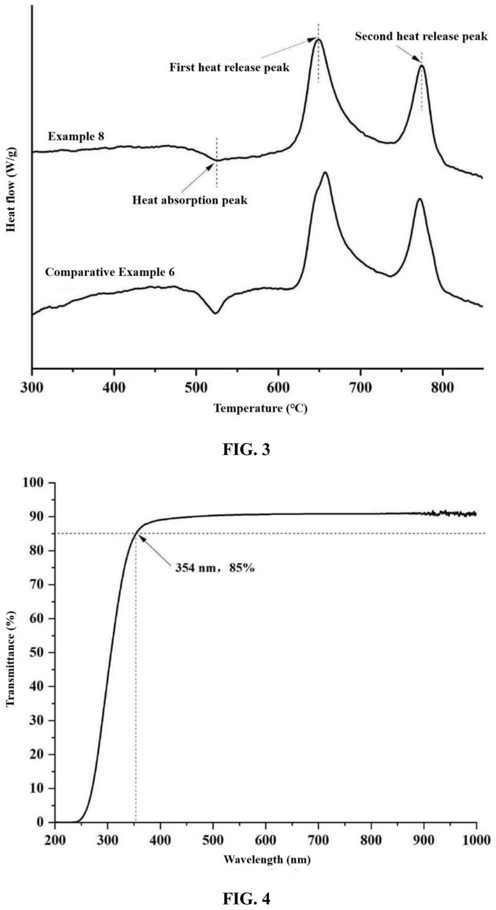

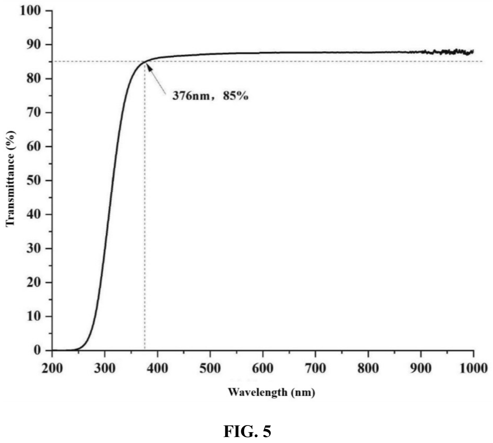

As can be seen from FIG. 2, the primary crystalline phase of the microcrystalline glass obtained in both the Examples and Comparative Examples is lithium disilicate. A comparison between FIG. 4 and FIG. 5 demonstrates that the microcrystalline glass prepared using the glass formulation of Example 8 exhibits superior optical transmittance compared to Comparative Example 6. A comparison between Table 5 and Table 6 demonstrates that the chemical etching-thinning effect of the microcrystalline glass from Examples 1-12 in either 10% or 5% HF solution is better than that of Comparative Examples 1-6. This indicates that, compared to Comparative Examples 1-6, which do not meet the formulation of the present invention, the microcrystalline glass of Examples 1-12 achieves markedly improved chemical etching-thinning effect. In addition, through the tests in HCl solution and NaOH solution, the change of mass per unit area of the microcrystalline glass of Examples 1-12 is similar to that of the microcrystalline glass of Comparative Examples 1-6, and both of them are low. This confirms that while improving the chemical etching-thinning effect, the microcrystalline glass of Examples still maintains good chemical durability against acids and bases even at higher temperatures.

From the above tests, it can be seen that the microcrystalline glass in the present invention can achieve highly efficient chemical etching-thinning in low-concentration HF solutions. It is not only beneficial for improving the chemical etching-thinning rate of microcrystalline glass, thus improving the production efficiency of ultra-thin microcrystalline glass products or customized microcrystalline glass products, but also eliminates the need for high-concentration acidic liquid, thus better reducing the harm of etching solution to the health of operators and the environment.

Finally, it should be explained that the above examples are provided solely to illustrate rather than limit the technical solutions of the present invention. Those skilled in the art should understand that any modifications or equivalent replacements made to these technical solutions without departing from the essence and scope of the present invention shall fall within the scope of the appended claims of the present invention.

### Industrial Practicability

According to the present invention, the composition of the microcrystalline glass is optimized and adjusted, making the microcrystalline glass satisfy the specific composition and structure, so that a large amount of lithium disilicate crystalline phase is comprised in the microcrystalline glass. Through this method, not only are the high intrinsic strength and excellent optical properties of the microcrystalline glass ensured, but also the chemical etching-thinning effect of the microcrystalline glass is significantly improved. As a result, the microcrystalline glass can achieve a better chemical etching-thinning effect even in low-concentration acidic liquids. It is beneficial for improving the chemical etching-thinning rate of the microcrystalline glass, thus further enhancing the production efficiency of ultra-thin microcrystalline glass products or customized microcrystalline glass products. Moreover, by using the microcrystalline glass provided in the present invention for chemical etching-thinning, the use of high-concentration acidic liquid can be eliminated, thereby better reducing the harm of etching solutions to operator health and the environment.

## Claims

1. A microcrystalline glass, **characterized in that** the microcrystalline glass comprises a lithium disilicate crystalline phase, and a content of the lithium disilicate crystalline phase is greater than contents of other crystalline phases in the microcrystalline glass; in terms of a mole percentage on an oxide basis, the microcrystalline glass comprises following components:
SiO₂: 55.00mol%-65.00mol%,
P₂O₅: 1.00mol%-3.00mol%,
ZrO₂: 2.00mol%-5.00mol%,
Li₂O: 25.00mol%-32.00mol%,
Al₂O₃: 0-2.00mol%,
MgO: 0-2.00mol%,
Na₂O: 0-3.00mol%,
K₂O: 0-1.00mol%,
CaO: 0-2.00mol%,
SrO: 0-2.00mol%,
Ta₂O₅: 0-1.00mol%,
La₂O₃: 0-1.00mol%; and
in terms of a content expressed by the mole percentage on the oxide basis, a composition of the microcrystalline glass satisfies: 2×Li₂O+9×ZrO₂+1.2×CaO≥88.00mol%, and optionally, 2×Li₂O+9×ZrO₂+1.2×CaO≥90.00mol%, wherein each oxide chemical formula respectively represents a mole percentage content of a corresponding component in the composition of the microcrystalline glass.

2. The microcrystalline glass according to claim 1, wherein in terms of the content expressed by the mole percentage on the oxide basis, a content of SiO₂ and a content of Li₂O in the microcrystalline glass satisfy following conditions: SiO₂+Li₂O=89.00mol%-96.00mol%; optionally, SiO₂+Li₂O=90.00mol%-95.00mol%.

3. The microcrystalline glass according to claim 1 or 2, wherein in terms of the content expressed by the mole percentage on the oxide basis, a content of SiO₂ and a content of Li₂O in the microcrystalline glass satisfy following conditions: SiO₂/Li₂O=2.00-2.50; optionally, SiO₂/Li₂O=2.00-2.30.

4. The microcrystalline glass according to any one of claims 1-3, wherein in terms of the content expressed by the mole percentage on the oxide basis, a content of components in the microcrystalline glass further satisfies following conditions: (Li₂O+ZrO₂)/(SiO₂+Al₂O₃+CaO)≥0.50; optionally, a value of (Li₂O+ZrO₂)/(SiO₂+Al₂O₃+CaO) is 0.50-0.60, wherein each oxide chemical formula respectively represents a mole percentage content of a corresponding component in the composition of the microcrystalline glass.

5. The microcrystalline glass according to any one of claims 1-4, wherein in terms of the content expressed by the mole percentage on the oxide basis, a content of components in the microcrystalline glass further satisfies following conditions: (2×Li₂O-6×P₂O₅)/SiO₂≥0.70; optionally, a value of (2×Li₂O-6×P₂O₅)/SiO₂ is 0.70-1.00, wherein each oxide chemical formula respectively represents a mole percentage content of a corresponding component in the composition of the microcrystalline glass.

6. The microcrystalline glass according to any one of claims 1-5, wherein in terms of the mole percentage on the oxide basis: a SiO₂ content in the microcrystalline glass is 58.00mol%-65.00mol%, optionally, the SiO₂ content is 60.00mol%-64.00mol%, and/or
a Li₂O content in the microcrystalline glass is 26.00mol%-32.00mol%, optionally, the Li₂O content is 27.00mol%-3 1.00mol%, and/or
a ZrO₂ content in the microcrystalline glass is 2.50mol%-5.00mol%, optionally, the ZrO₂ content is 3.00mol%-5.00mol%; and/or
a P₂O₅ content in the microcrystalline glass is 1.50mol%-3.00mol%, optionally, the P₂O₅ content is 1.50mol%-2.50mol%.

7. The microcrystalline glass according to any one of claims 1-6, wherein in terms of the mole percentage on the oxide basis, the microcrystalline glass comprises following components:
SiO₂: 60.50mol%-64.00mol%, P₂O₅: 1.50mol%-2.50mol%, ZrO₂: 4.00mol%-5.00mol%, Li₂O: 28.00mol%-31.00mol%, Al₂O₃: 0-1.50mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, and La₂O₃: 0-1.00mol%.

8. The microcrystalline glass according to any one of claims 1-7, wherein a crystallinity of the microcrystalline glass is ≥60.00wt%, optionally, the crystallinity is 60.00wt%-90.00wt%; and/or
an average crystal size in the microcrystalline glass is less than or equal to 100nm, optionally, the average crystal size is less than or equal to 50nm, and further optionally, the average crystal size is 10nm-40nm.

9. The microcrystalline glass according to any one of claims 1-8, wherein a density of the microcrystalline glass is ≥2.50g/cm³, and optionally, the density is 2.50g/cm³-2.70g/cm³; and/or
a refractive index of the microcrystalline glass is ≤1.60, and optionally, the refractive index is 1.50-1.60.

10. The microcrystalline glass according to any one of claims 1-9, wherein a Young's modulus of the microcrystalline glass is ≥100GPa, and optionally, the Young's modulus is 108GPa-130GPa, and further optionally, the Young's modulus is 114GPa-130GPa.

11. The microcrystalline glass according to any one of claims 1-10, wherein the microcrystalline glass is transparent to visible light; at a thickness of 0.5mm and for a light with a wavelength of 550nm, a transmittance of the microcrystalline glass is ≥85.00%, optionally, the transmittance of the microcrystalline glass is ≥ 90.00%, and/or, at the thickness of 0.5mm, an optical b-value of the microcrystalline glass is ≤1.0, optionally, the optical b-value is ≤0.8.

12. The microcrystalline glass according to any one of claims 1-11, wherein when placed in an aqueous hydrofluoric acid solution with a mass concentration of 10% at 20°C for 20min, a change in mass per unit area of the microcrystalline glass is greater than or equal to 28.00mg/cm², and optionally, the change in mass per unit area of the microcrystalline glass is 30.00mg/cm²-50.00mg/cm².

13. A preparation method for the microcrystalline glass according to any one of claims 1-11, **characterized in that** the preparation method comprises following steps:
providing a base glass, wherein in terms of the mole percentage on the oxide basis, the base glass comprises following components: SiO₂: 55.00mol%-65.00mol%, P₂O₅: 1.00mol%-3.00mol%, ZrO₂: 2.00mol%-5.00mol%, Li₂O: 25.00mol%-32.00mol%, Al₂O₃: 0-2.00mol%, MgO: 0-2.00mol%, Na₂O: 0-3.00mol%, K₂O: 0-1.00mol%, CaO: 0-2.00mol%, SrO: 0-2.00mol%, Ta₂O₅: 0-1.00mol%, La₂O₃: 0-1.00mol%; in terms of a content expressed by the mole percentage on the oxide basis, a composition of the base glass satisfies: 2×Li₂O+9×ZrO₂+1.2×CaO≥88.00mol%; and
carrying out a heat treatment on the base glass to crystallize, so as to obtain the microcrystalline glass, wherein the microcrystalline glass comprises the lithium disilicate crystalline phase, and a content of the lithium disilicate crystalline phase is greater than contents of other crystalline phases in the microcrystalline glass.

14. The preparation method for the microcrystalline glass according to claim 13, wherein the heat treatment comprises a nucleation treatment and a crystallization treatment, and a nucleation treatment temperature is 500°C-700°C, and a nucleation treatment duration is 10min-1440min; and a crystallization treatment temperature is 600°C-750°C, and a crystallization treatment duration is 5min-1440min.

15. An electronic device, **characterized in that** the electronic device comprises the microcrystalline glass according to any one of claims 1-12, or the electronic device comprises a chemically strengthened microcrystalline glass made by chemically strengthening the microcrystalline glass according to any one of claims 1-12.
